# EUROPÄISCHE PATENTSCHRIFT

(11) **EP 0 930 157 B1**
(45) Veröffentlichungstag und Bekanntmachung des Hinweises auf die Patenterteilung: **27.10.2004**
(21) Anmeldenummer: 98123731.6
(22) Anmeldetag: 14.12.1998
(51) Int. Cl.: B32B 31/26, B29D 9/00

(54) **Verfahren zum Aufkaschieren einer Kunststoff-Folie auf die Rückseite eines danach zu hinterschäumenden Dekormaterials**
Method for fixing plastic film on the back side of a decorative material before back-foaming
Procédé pour appliquer une feuille de matière plastique au dos d'un élément décoratif avant de lui adjoindre un revers en mousse

(30) Priorität: 15.01.1998 DE 19801651
(43) Veröffentlichungstag der Anmeldung: 21.07.1999
(73) Patentinhaber: Bayerische Motoren Werke Aktiengesellschaft, 80788 München (DE)
(72) Erfinder: Ulrich, Josef, 86570 Inchenhofen (DE)

(56) Entgegenhaltungen:
- DE-A- 3 924 254
- DE-A- 4 433 455
- US-A- 4 824 506
- US-A- 5 681 408

## Beschreibung

Die Erfindung betrifft ein Verfahren zum Aufkaschieren einer Kunststoff-Folie auf die Rückseite eines danach zu hinterschäumenden zumindest geringfügig luftdurchlässigen, flächigen Dekormaterials, insbesondere aus Leder oder Textil oder Alcantara, wobei die zunächst in einem Spannrahmen gehaltene Kunststoff-Folie erwärmt und so auf die Rückseite des mittels Unterdruck an einer Werkzeugform gehaltenen Dekormaterials aufgebracht wird. Zum bekannten Stand der Technik wird auf die US 4,758,294 verwiesen.

Soll beispielsweise zur Herstellung eines Fahrzeug-Innenausstattungsteiles ein zumindest geringfügig luftdurchlässiges Dekormaterial hinterschäumt werden, d.h. soll auf die Rückseite dieses beispielsweise aus Leder oder einem Textilgewebe oder Alcantara oder dgl. bestehenden Dekormaterials eine Kunststoff-Schaumschicht aufgebracht werden, so sind Maßnahmen zu treffen, die ein Eindringen des Kunststoff-Schaummateriales in das Dekormaterial oder sogar ein Durchdringen desselben verhindern.

Eine mögliche derartige Maßnahme ist in der oben genannten US 4,758,294 gezeigt. Demnach wird auf der Rückseite des Dekormaterials vor dem Hinterschäumen eine Kunststoff-Folie aufkaschiert, die mit einem Heißschmelzkleber vorbeschichtet ist. Diese Kunststoff-Folie wird hierzu - gehalten in einem Spannrahmen - erwärmt, wodurch der Kleber in den schmelzflüssigen Zustand übergeht und gleichzeitig die Kunststoff-Folie so weit erweicht wird, daß sie in optimaler Weise auf die Rückseite des Dekormaterials aufkaschiert, d.h. aufgeklebt werden kann. Dabei wird die Kunststoff-Folie durch Unterdruck an die Rückseite des Dekormaterials herangezogen, wobei dieser Unterdruck von Seiten einer Werkzeugform ausgeht, auf welchem das Dekormaterial aufliegt.

Abgesehen davon, daß der Schmelzkleber, mit welchem die Kunststoff-Folie beschichtet ist, einen wünschenswerterweise zu vermeidenden Aufwand darstellt, sind mit dem bekannten Verfahren keine unter allen Umständen befriedigenden Ergebnisse erzielbar. Insbesondere in Bereichen, in denen die Kunststoff-Folie beim Aufkaschieren auf das Dekormaterial, welches wie bekannt und üblich eine der Werkzeugform entsprechende und von einer Ebene mehr oder weniger abweichende Formgebung aufweist, relativ stark umgeformt oder gedehnt werden muß, wirkt sich der schnell haftende Schmelzkleber nachteilig aus.

Im Hinblick hierauf ein verbessertes Verfahren nach dem Oberbegriff des Anspruchs 1 aufzuzeigen, ist Aufgabe der vorliegenden Erfindung.
Die Lösung dieser Aufgabe ist dadurch gekennzeichnet, daß die Kunststoff-Folie kleberlos auf das Dekormaterial aufkaschiert wird, wobei die nahezu bis zu ihrem Schmelzpunkt erwärmte Kunststoff-Folie in einem ersten Schritt auf die Rückseite des Dekormaterials aufgelegt und in einem zweiten Schritt unter weiterer Wärmeeinwirkung zumindest geringfügig in dieses eingeschmolzen wird, und wobei der hierzu erforderliche Anpreßdruck durch den weiterhin über die Werkzeugform einwirkenden Unterdruck erzeugt wird. Vorteilhafte Weiterbildungen sind Inhalt der Unteransprüche.

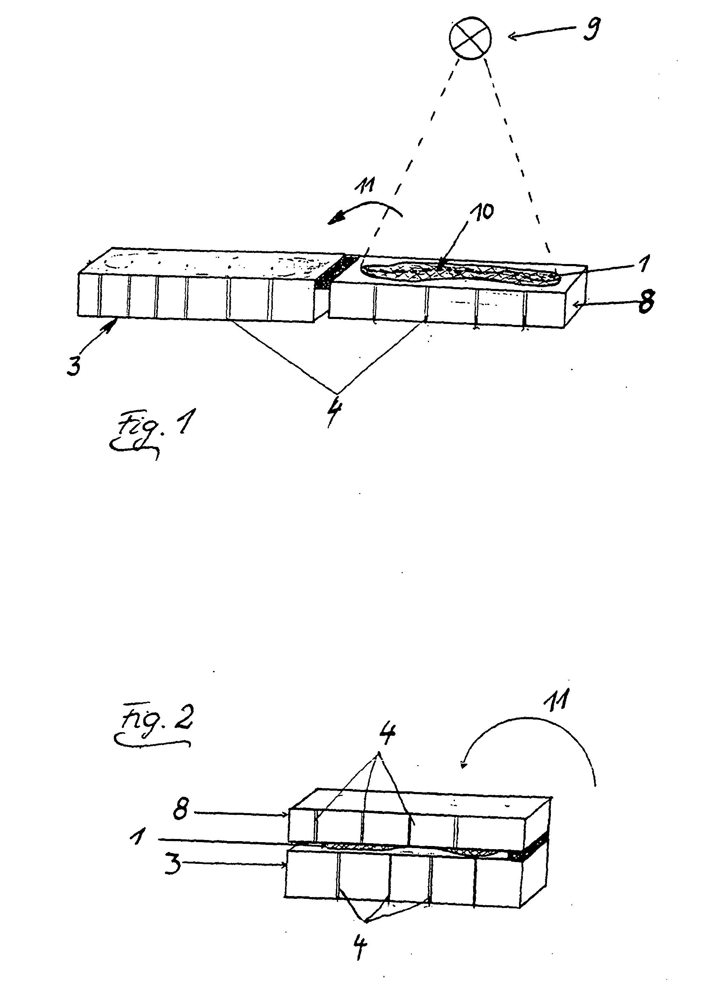

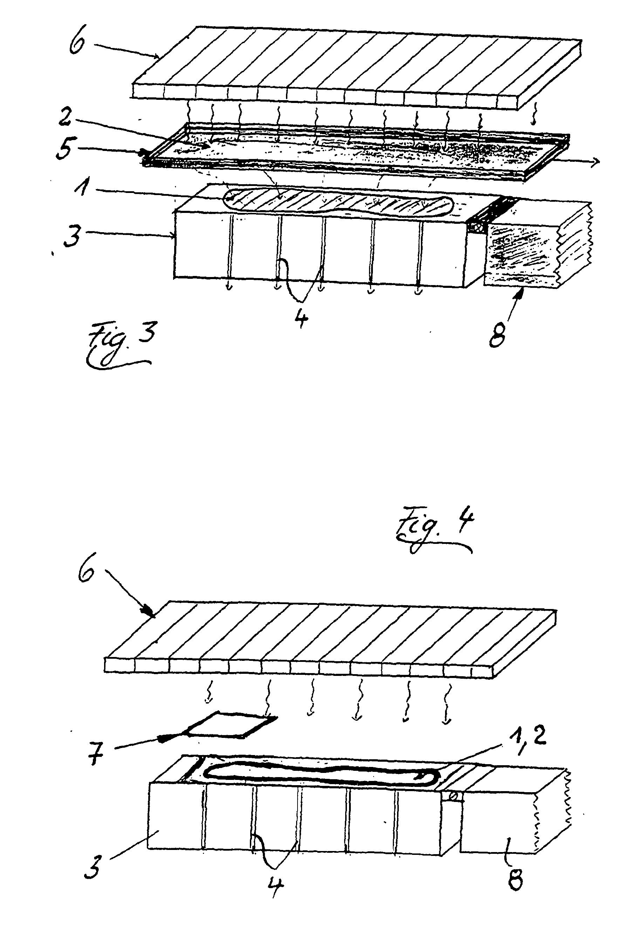

Näher erläutert wird die Erfindung anhand eines bevorzugten Ausführungsbeispieles anhand von vier Prinzipskizzen, die einzelne Verfahrensschritte wiedergeben, wobei der den wesentlichen Verfahrensschritten nach den Fig. 2 bis 4 vorgeschaltete Verfahrensschritt nach Fig. 1 eine vorteilhafte Weiterbildung der Erfindung beinhaltet.

Mit der Bezugsziffer 1 ist ein flächiges Dekormaterial bezeichnet, das bevorzugt Leder, daneben jedoch auch ein Textilgewebe oder Alcantara sein kann und das später hinterschäumt und ggf. mit einem nicht dargestellten Trägerteil verbunden werden soll, um beispielsweise ein Fahrzeug-Innenausstattungsteil zu bilden. Auf die Rückseite dieses flächigen Dekormaterials 1 soll zunächst eine Kunststoff-Folie 2, insbesondere aus TPU oder TPE bestehend, aufgebracht werden, um beim späteren soeben genannten Hinterschäumen mit einem Kunststoffschaummaterial ein Eindringen dieses Kunststoffschaumes in das Dekormaterial 1 zu verhindern.

Im Rahmen der wesentlichen Verfahrensschritte der vorliegenden Erfindung liegt das Dekormaterial 1 mit seiner Vorderseite auf einer Werkzeugform 3 auf, deren Oberfläche im wesentlichen ein Negativbild der gewünschten Form des letztendlich zu erzielenden Fertigteiles, d.h. beispielsweise des Fahrzeug-Innenausstattungsteiles ist. Das Dekormaterial 1 ist somit auf dieser Werkzeugform 3 aufliegend bereits im wesentlichen vorgeformt, wobei das Dekormaterial 1 auf dieser Werkzeugform 3 bzw. auf der Oberfläche desselben durch Unterdruck gehalten wird, d.h. an die Oberfläche der Werkzeugform 3 wird ein Vakuum angelegt, wozu entsprechende Kanäle 4, die an der Oberfläche der Werkzeugform 3 münden, in dieser Werkzeugform 3 vorgesehen sind. Mit ihren entgegengesetzten Enden sind diese Kanäle 4 mit einer Unterdruckpumpe verbunden (nicht gezeigt). Die Leistung dieser Unterdruckpumpe ist dabei derart gewählt, daß das Dekormaterial 1 sicher auf der Oberfläche der Werkzeugform 3 gehalten werden kann, wenngleich das Dekormaterial 1 selbst zumindest geringfügig luftdurchlässig ist.

Zunächst wird nun erläutert, wie das Dekormaterial 1 in besonders vorteilhafter Weise auf die Werkzeugform 3 aufgelegt sowie in dieser vorgeformt werden kann:
Wie Fig. 1 zeigt, wird das Dekormaterial 1 vor dem Auflegen auf die Werkzeugform 3 auf einer mit dieser korrespondierenden Negativform 8 bei sichtbarer Dekormaterial-Vorderseite aufgelegt ausgerichtet und dabei an dieser ebenfalls durch Unterdruck (vgl. Kanäle 4 zum Anlegen von Unterdruck) gehalten. Das Dekormaterial 1 wird somit mit seiner Rückseite auf die Negativform 8 aufgelegt, so daß dessen Vorderseite sichtbar ist und hiermit das Dekormaterial 1 wie tatsächlich gewünscht positioniert werden kann. Beispielsweise können auf diese Weise auch evtl. vorhandene Nähte (eine solche ist mit der Bezugsziffer 10 bezeichnet) im Dekormaterial 1 wie gewünscht plaziert werden, wozu das Dekormaterial 1 auf der Oberfläche der Negativform 8 beispielsweise geringfügig verschoben werden kann. Selbstverständlich muß hierzu der analog zur Werkzeugform 3 angelegte Unterdruck von einer dementsprechenden Größe sein, daß das Dekormaterial 1 zwar auf der Oberfläche der Negativform 8 gehalten wird, jedoch trotzdem geringfügig paraiiei zu dessen Oberfläche verschiebbar ist.

Um dabei eine Vorlage zur Verfügung zu haben, wie das Dekormaterial 1 auf der Negativform 8 zu positionieren ist, kann zum Erleichtern des Ausrichtens dieses Dekormateriales 1 dessen Sollposition mittels einer Projektionseinrichtung 9 auf die Vorderseite des Dekormaterials 1 optisch aufprojiziert werden.

Nach erfolgreicher Ausrichtung des Dekormateriales 1 auf der Negativform 8 wird die letztgenannte geeignet über bzw. auf der Werkzeugform 3 positioniert, was bevorzugt durch eine Schwenkbewegung gemäß Pfeilrichtung 11 erfolgt, so daß das Dekormaterial 1 nunmehr von der Negativform 8 an die Werkzeugform 3 übergeben werden kann. In diesem in Fig. 2 dargestellten Stadium wird das Dekormaterial 1 dabei auch zumindest teilweise vorgeformt, wobei einerseits die Anpreßkraft der Negativform 8 auf die Werkzeugform 3 wirksam ist und andererseits der an der Oberfläche der Werkzeugform 3 anliegende Unterdruck - wie bereits erläutert - wirkt. Anschließend wird die Negativform 8 gegen Pfeilrichtung 11 wieder von der Werkzeugform 3 weggeklappt.

Im nachfolgenden Verfahrensschritt gemäß Fig. 3 wird nun die auf die nunmehr offenliegende Rückseite des Dekormateriales 1 aufzubringende Kunststoff-Folie 2 vorbereitet. Diese ist dabei in einem Spannrahmen 5 im wesentlichen oberhalb der Werkzeugform 3 sowie beabstandet von dieser gehalten. Zunächst wird nun diese im Spannrahmen 5 gehaltene Kunststoff-Folie 2 erwärmt und zwar mittels einer oberhalb der Kunststoff-Folie 2 und somit auf der der Werkzeugform 3 abgewandten Seite derselben vorgesehenen Heizvorrichtung 6. Bei dieser Heizvorrichtung 6 kann es sich beispielsweise um flächig angeordnete Infrarotstrahler oder auch um ein Heißluftgebläse mit einer Vielzahl von zur Kunststoff-Folie 2 hin gerichteten Gebläse-Austrittsöffnungen handeln.

Aufgrund der Erwärmung wird die thermoplastische Kunststoff-Folie 2 nahezu bis zu ihrem Schmelzpunkt aufgeheizt, so daß sie nun auf einfache Weise auf die Rückseite des Dekormaterials 1 aufgelegt und aufkaschiert werden kann. Der an der Oberfläche der Werkzeugform 3 noch anliegende Unterdruck sorgt dabei dafür, daß die Kunststoff-Folie 2 flächig auf der Rückseite des Dekormaterials 1 zum Liegen kommt, nachdem letzteres zumindest geringfügig luftdurchlässig ist. Jedoch ist in diesem Stadium noch keine innige Verbindung zwischen dem Dekormaterial 1 sowie der Kunststoff-Folie 2 hergestellt, da kein Klebstoff oder dgl. verwendet wird. Vielmehr wird die Kunststoff-Folie 2 kleberlos auf das Dekormaterial 1 aufkaschiert, wobei dieser Verfahrensschritt nicht explizit dargestellt ist, da er wie üblich erfolgen kann.

Dargestellt jedoch ist der darauffolgende Verfahrensschritt, und zwar in Fig. 4. Bei diesem Verfahrensschritt wird nun die Kunststoff-Folie 2 bzw. das nahezu geschmolzene Material derselben zumindest geringfügig in das Dekormaterial 1 eingeschmolzen, um eine innige Verbindung zwischen Dekormaterial 1 und Kunststoff-Folie 2 herzustellen. Hierzu wirkt zum einen weiterhin Unterdruck auf den Verbund von Dekormaterial 1 und Kunststoff-Folie 2 ein, wobei die Kunststoff-Folie aufgrund der zumindest geringfügigen Luftdurchlässigkeit des Dekormaterials 1 durch diesen Unterdruck in ausreichendem Maße an die Rückseite des Dekormaterials 1 angepreßt wird.

Insbesondere jedoch erfolgt für diese Herstellung des innigen Verbundes eine weitere Wärmeeinwirkung auf die Kunststoff-Folie 2 sowie das darunterliegende Dekormaterial 1, und zwar immer noch in bzw. an der Werkzeugform 3. Die bereits erwähnte Heizvorrichtung 6 wird hierzu geeignet oberhalb der Werkzeugform 3 bzw. der Kunststoff-Folie 2 positioniert und aktiviert.

In anderen Worten ausgedrückt, erfolgt somit nach dem kleberlosen Aufkaschieren der nahezu bis zu ihrem Schmelzpunkt erwärmten Kunststoff-Folie 2 auf das Dekormaterial 1 eine Nachheizphase, in welcher die auf das Dekormaterial 1 durch den Unterdruck gepreßte Kunststoff-Folie 2 ohne Verwendung irgendeines Klebstoffes in das Dekormaterial 1 zumindest geringfügig eingeschmolzen wird, wodurch die zur nötigen Adhäsion gewünschte Haftbrücke ausgebildet wird.

Nach Beendigung dieser Nachheizphase wird die Heizvorrichtung 6 entfernt und die Kühlung des Verbundes von Dekormaterial 1 und Kunststoff-Folie 2 eingeleitet. Anschließend daran kann dieser Verbund von Dekormaterial 1 und Kunststoff-Folie 2 aus der Werkzeugform 3 entnommen werden, wobei man hiermit vorteilhafterweise quasi ein bereits vorgefertigtes Halbzeug zur Verfügung hat; daneben ist es jedoch auch möglich, das Dekormaterial 1 mit der auf dessen Rückseite vorgesehenen Kunststoff-Folie 2 noch in der Werkzeugform 3 zu hinterschäumen, wozu selbstverständlich ein geeignetes Gegenwerkzeug benötigt wird.

Das erfindungsgemäße Verfahren erlaubt es auch, die Kunststoff-Folie 2 bezüglich der gesamten rückseitigen Oberfläche des Dekormaterials 1 lediglich bereichsweise mit diesem innig zu verbinden, falls eine derartige innige Verbindung nur in ausgewählten Bereichen dieser Oberfläche gewünscht ist. Dies kann erwünscht sein, wenn in diesen Bereichen die Kunststoff-Folie 2 anschließend an den beschriebenen Verfahrensablauf wieder entfernt werden soll, beispielsweise um Randzonen des Dekormaterials 1 frei von einer derartigen Kunststoff-Folie 2 zu halten, bspw. wenn das Dekormaterial 1 in diesem Randbereich noch weiter verformt oder mit einem Trägermaterial verklebt werden muß.

Eine erste Möglichkeit, wie die Kunststoff-Folie 2 nur bereichsweise in das Dekormaterial 1 eingeschmolzen werden kann, besteht darin, daß zwischen der Kunststoff-Folie 2 sowie dem Dekormaterial 1 im entsprechenden Oberflächen-Bereich eine aus einem geeigneten Material bestehende Folie zwischengelegt ist, die selbst nicht anschmilzt und somit verhindert, daß das Material der erweichten Kunststoff-Folie 2 zumindest teilweise in das Dekormaterial 1 eingeschmolzen wird. Diese sog. Zwischen-Folie ist hier jedoch der Einfachhheit halber nicht dargestellt.

Gezeigt ist vielmehr eine weitere Möglichkeit, wie die Kunststoff-Folie 2 lediglich bereichsweise in das Dekormaterial 1 eingeschmolzen werden kann: Hierzu wird beim Verfahrensschritt nach Fig. 4 zwischen der Heizvorrichtung 6 sowie der Kunststoff-Folie 2 eine geeignete Blende 7 derart positioniert, daß im Bereich der bzw. unterhalb dieser Blende 7 keine direkte Wärmeeinwirkung auf die Kunststoff-Folie 2 erfolgt. Im übrigen kann diese oder auch eine ähnliche Blende 7 auch beim Verfahrensschritt nach Fig. 3 positioniert werden, wenn ein gewisser Oberflächenabschnitt der Kunststoff-Folie 2 überhaupt nicht angeschmolzen werden soll. In denjenigen Bereichen, in denen dann insbesondere in der Nachheizphase nach Fig. 4 keine Wärmeeinwirkung auf die Kunststoff-Folie 2 erfolgt, wird auch die beschriebene innige Verbindung zwischen dieser sowie dem Dekormaterial 1 nicht hergestellt.

Es sei noch darauf hingewiesen, daß dies sowie eine Vielzahl weiterer Details durchaus abweichend vom beschriebenen Ausführungsbeispiel gestaltet sein können, ohne den Inhalt der Patentansprüche zu verlassen. Stets erhält man ein im Hinblick auf ein nachfolgendes Hinterschäumen in optimaler Weise vorbereitetes Dekormaterial 1, welches vorteilhafterweise als kleberloses System ausgeführt ist, und an weichem aufgrund der Kunststoff-Folie 2 auch eventuell beim Hinterschäumen ausgetretener Schaum ohne großen Arbeitsaufwand entfernt werden kann. Aufgrund der Anpressung der Kunststoff-Folie 2 durch Unterdruck können vorteilhafterweise keine Schubfalten, wie ansonsten bei mechanischem Anpressen, entstehen. Dabei ist vorteilhafterweise auch eine Vorfertigung eines derartigen Bezuges, d.h. Verbundes aus Dekormaterial 1 und Kunststoff-Folie 2 möglich, da durch die aufkaschierte Kunststoff-Folie 2 das Dekormaterial 1, beispielsweise ein Lederkleid, seine durch die Werkzeugform 3 vorgegebene Kontur behält.

### Bezugszeichenliste:

- 1: Dekormaterial
- 2: Kunststoff-Folie
- 3: Werkzeugform
- 4: Kanäle in 3 zum Halten von 1 durch Unterdruck
- 5: Spannrahmen
- 6: Heizvorrichtung
- 7: Blende
- 8: Negativform
- 9: Projektionsvorrichtung
- 10: Naht in 1
- 11: Pfeilrichtung

## Patentansprüche

1. Verfahren zum Aufkaschieren einer Kunststoff-Folie (2) auf die Rückseite eines danach zu hinterschäumenden zumindest geringfügig luftdurchlässigen, flächigen Dekormaterials (1), insbesondere aus Leder oder Textil oder Alcantara, wobei die zunächst in einem Spannrahmen (5) gehaltene Kunststoff-Folie (2) erwärmt und so auf die Rückseite des mittels Unterdruck an einer Werkzeugform (3) gehaltenen Dekormaterials (1) aufgebracht wird,
**dadurch gekennzeichnet, daß** die Kunststoff-Folie (2) kleberlos auf das Dekormaterial (1) aufkaschiert wird, wobei die nahezu bis zu ihrem Schmelzpunkt erwärmte Kunststoff-Folie in einem ersten Schritt auf die Rückseite des Dekormaterials aufgelegt und in einem zweiten Schritt unter weiterer Wärmeeinwirkung zumindest geringfügig in das Dekormaterial (1) eingeschmolzen wird, und wobei der hierzu erforderliche Anpreßdruck durch den weiterhin über die Werkzeugform (3) einwirkenden Unterdruck erzeugt wird.

2. Verfahren nach Anspruch 1,
**dadurch gekennzeichnet, daß** die Kunststoff-Folie (2) nur bereichsweise in das Dekormaterial (1) eingeschmolzen wird.

3. Verfahren nach Anspruch 1 oder 2,
**dadurch gekennzeichnet, daß** eine lediglich bereichsweise Wärmeeinwirkung auf die Kunststoff-Folie (2) durch Positionieren einer geeigneten Blende (7) zwischen der Kunststoff-Folie (2) sowie einer Heizvorrichtung (6) realisiert wird.

4. Verfahren nach einem der vorangegangenen Ansprüche,
**dadurch gekennzeichnet, daß** das Dekormaterial (1) vor dem Auflegen auf die Werkzeugform (3) auf einer mit dieser korrespondierenden Negativform (8) bei sichtbarer Vorderseite ausgerichtet und an dieser durch Unterdruck gehalten wird, wobei zum Erleichtern des Ausrichtens die Sollposition auf die Vorderseite des Dekormaterials (1) aufprojiziert wird und daß anschließend das Dekormaterial (1) von der Negativform (8) an die Werkzeugform (3) übergeben wird.

## Claims

1. A method of applying a plastic sheet (2) to the back of an at least slightly air-permeable flat decorative material (1), especially leather, textile or Alcantara, for subsequently lining with foam, wherein the plastic sheet (2) is first held in a tenter (5) and heated and then applied to the back of the decorative material, held by negative pressure on a mould (3),
**characterised in that** the plastic sheet (2) is applied to the decorative material (1) without an adhesive, wherein in a first step the plastic sheet, heated to near its melting point, is applied to the back of the decorative material and in a second step it is additionally heated and at least slightly melted into the decorative material (1), wherein the required contact pressure is generated by the negative pressure, which continues to act via the mould (3).

2. A method according to claim 1, **characterised in that** the plastic sheet (2) is melted into the decorative material (1) only over part of its surface.

3. A method according to claim 1 or 2, **characterised in that** the plastic sheet (2) is heated at some places only, by positioning a suitable shutter (7) between the sheet (2) and a heater (6).

4. A method according to any of the preceding claims, **characterised in that** the decorative material (1), before being laid on the mould (3), is aligned with a corresponding negative mould (8) with its front visible and is held thereon by negative pressure, and in order to facilitate the alignment the said position is projected on to the front of the decorative material (1), after which the material (1) is transferred from the negative mould (8) to the mould (3).

## Revendications

1. Procédé pour appliquer une feuille de matière plastique (2) au dos d'un élément décoratif (1) plat au moins légèrement perméable à l'air, en particulier en cuir, en textile ou en alcantara, avant de lui adjoindre un revers en mousse, selon lequel la feuille de matière plastique (2) initialement maintenue dans un cadre tendeur (5) est chauffée et posée ainsi au dos de l'élément décoratif (1) maintenu sur un moule (3) par dépression,
**caractérisé en ce que**
la feuille de matière plastique (2) est appliquée sans colle sur l'élément décoratif (1), la feuille de matière plastique (2) chauffée presque jusqu'à son point de fusion étant posée au dos de l'élément décoratif (1) dans une première étape et fondue au moins légèrement dans celui-ci en poursuivant le chauffage dans une deuxième étape, et la pression d'application nécessaire étant générée par la dépression agissant toujours par le biais du moule (3).

2. Procédé selon la revendication 1,
**caractérisé en ce que**
la feuille de plastique (2) n'est fondue que par zones dans l'élément décoratif (1).

3. Procédé selon la revendication 1 ou 2,
**caractérisé en ce qu'**
un chauffage seulement par zones de la feuille de plastique (2) est réalisé en positionnant un écran (7) approprié entre la feuille de plastique (2) et un dispositif de chauffage (6).

4. Procédé selon l'une quelconque des revendications précédentes,
**caractérisé en ce qu'**
avant d'être posé sur le moule (3), l'élément décoratif (1) est aligné sur un contre-moule (8) correspondant à celui-ci avec l'endroit visible et maintenu sur celui-ci par dépression, la position théorique étant projetée sur la face avant de l'élément de décor (1) pour faciliter l'alignement, et **en ce que** l'élément décoratif (1) est ensuite passé du contre-moule (8) au moule (3).
